# EUROPÄISCHE PATENTSCHRIFT

(11) **EP 2 768 718 B1**
(45) Veröffentlichungstag und Bekanntmachung des Hinweises auf die Patenterteilung: **23.03.2016**
(21) Anmeldenummer: 12778053.4
(22) Anmeldetag: 26.09.2012
(51) Int. Cl.: B62D 15/02, G01S 15/93

(54) **VERFAHREN UND VORRICHTUNG ZUR UNTERSTÜTZUNG EINES FAHRERS EINES KRAFTFAHRZEUGS**
METHOD AND DEVICE FOR ASSISTING A DRIVER OF A MOTOR VEHICLE
PROCÉDÉ ET DISPOSITIF D'ASSISTANCE À UN CONDUCTEUR D'UN VÉHICULE AUTOMOBILE

(30) Priorität: 21.10.2011 DE 102011084943
(43) Veröffentlichungstag der Anmeldung: 27.08.2014
(73) Patentinhaber: Robert Bosch GmbH, 70442 Stuttgart (DE)
(72) Erfinder: STARKE, Arwed, 70563 Stuttgart (DE); PAMPUS, Christian, 71229 Leonberg (DE)
(86) Internationale Anmeldenummer: PCT/EP2012/068993
(87) Internationale Veröffentlichungsnummer: WO 2013/056959

(56) Entgegenhaltungen:
- EP-A1- 2 364 898
- EP-A2- 2 289 768
- WO-A1-2011/076322
- DE-A1-102010 006 979
- US-A1- 2010 100 270

## Beschreibung

### Stand der Technik

Die Erfindung betrifft ein Verfahren zur Unterstützung eines Fahrers eines Kraftfahrzeugs bei einem Einparkmanöver in eine Querparklücke, bei dem das Kraftfahrzeug vorwärts in die Querparklücke eingeparkt wird.

Fahrassistenzsysteme finden einen immer breiteren Einsatz, um den Fahrer eines Kraftfahrzeugs zu unterstützen. Unterschieden wird hierbei in automatische und semiautomatische Systeme. Bei automatischen Systemen wird das durchzuführende Fahrmanöver automatisch vom Fahrassistenzsystem sowohl hinsichtlich Längsführung als auch hinsichtlich Querführung durchgeführt. Bei einem semi-automatischen System führt der Fahrer des Kraftfahrzeugs entweder die Längsführung durch, das heißt Bremsen und Beschleunigen des Kraftfahrzeugs, und die Querführung wird vom Fahrassistenzsytem übernommen oder die Querführung, das heißt die Lenkung des Kraftfahrzeugs, wird vom Fahrer des Kraftfahrzeugs durchgeführt und die Längsführung vom Fahrassistenzsystem. Schließlich sind auch noch Systeme am Markt verfügbar, die den Fahrer des Kraftfahrzeugs über Abstände zu Objekten in der Umgebung des Kraftfahrzeuges informieren. Derzeit erhältliche Fahrassistenzsysteme unterstützen den Fahrer des Kraftfahrzeugs im Allgemeinen beim Einparken, insbesondere beim Rückwärtseinparken in eine Längsparklücke.

Neben der Unterstützung beim Rückwärtseinparken in eine Längsparklücke kann auch eine Unterstützung beim Vorwärtseinparken gewünscht sein. So ist zum Beispiel in DE 10 2009 039 084 A1 oder in DE 10 2010 010 652 A1 offenbart, einen Fahrer eines Kraftfahrzeugs beim Einparken in eine Querparklücke zu unterstützen. Hierbei kann der Fahrer zum Beispiel beim Vorwärtseinparken in die Querparklücke unterstützt werden. Die Unterstützung kann beispielsweise dann aktiviert werden, wenn der Fahrer den Einparkvorgang bereits begonnen hat und das Fahrzeug teilweise in die Querparklücke eintaucht. Zur Unterstützung wird dann eine Bahn berechnet, entlang der das Fahrzeug zu bewegen ist, um den Einparkvorgang fortzusetzen. Wenn ein Vorwärtseinparken in einem Zug nicht möglich ist, ist auch vorgesehen, dass zunächst ein Rückwärtsfahrzug durchgeführt wird, an den sich dann ein Vorwärtsfahrzug anschließt, mit dem das Kraftfahrzeug in die Querparklücke eingeparkt wird. Nachteilig bei dem beschriebenen Verfahren ist insbesondere, dass bei einer nicht optimalen Ausrichtung des Kraftfahrzeugs oder bei Objekten, die die Fahrbahn auf der der Querparklücke gegenüberliegenden Seite begrenzen, eine große Anzahl an Fahrzügen notwendig sein kann, um das Kraftfahrzeug in die gewünschte Endposition in der Querparklücke zu bringen.

Aus der WO 2011/076322 A1 ist ein ein Verfahren zum automatischen Vorwärtseinparken in eine Querparklücke bekannt. Dabei wird das Fahrzeug vorab derart ausgerichtet, dass ein Soll-Lenkwinkel zwischen einem maximalen Lenkwinkel und einem minimalen Lenkwinkel liegt. Während der Vorwärtsrangierbewegung erfolgt ein iteratives Durchsuchen des zulässigen Lenkwinkelbereichs zwischen dem maximalen Lenkwinkel und dem minimalen Lenkwinkel nach einem aktuellen Lenkwinkel wobei der aktuelle Lenkwinkel eine maximale freie Weglänge in die Kopfparklücke bewirkt, so dass das Fahrzeug nicht auf Hindernisse trifft. Die Vorwärtsrangierbewegung wird beendet falls das Ende des Einparkvorgang erreicht ist oder eine Rückwärtsrangierbewegung aufgrund eines Hindernisses durchgeführt werden muss. Dabei ist stets die Ausgangssituation gegeben, dass das Fahrzeug deutlich vor der Parklücke mit dem automatischen Vorwärtseinparken beginnt, oder an der Parklücke schon teilweise vorbeigefahren ist.

Der nächstliegende Stand der Technik ist in der WO 2011/076322 zu sehen.

### Offenbarung der Erfindung

### Vorteile der Erfindung

Das erfindungsgemäße Verfahren zur Unterstützung eines Fahrers eines Kraftfahrzeugs bei einem Einparkmanöver in eine Querparklücke, bei dem das Kraftfahrzeug vorwärts in die Querparklücke eingeparkt wird, umfasst folgende Schritte:
(a) Erfassen der Umgebung des Kraftfahrzeugs mit einer Umfeldsensorik und Auswerten von mit der Umfeldsensorik erfassten Daten zur Erfassung einer Querparklücke und
(b) Wenn das Kraftfahrzeug zumindest teilweise in eine Querparklücke eintaucht, Durchführung eines geradeaus gerichteten Rückwärtsfahrzuges, gefolgt von einem Vorwärtsfahrzug, der ein Kreisbogensegment mit Vollausschlag der lenkbaren Räder in einer ersten Richtung und ein Kreisbogensegment mit einem Ausschlag der lenkbaren Räder in einer zweiten, der ersten entgegengerichteten Richtung sowie eine Ausrichtungsgerade umfasst, wenn mit diesem Vorwärtszug ein direktes Einparken in die Parklücke möglich ist;
   oder, wenn ein Einparken in insgesamt zwei Zügen nicht möglich ist, gefolgt von einem Vorwärtsfahrzug, mit dem das Kraftfahrzeug zumindest teilweise an der Querparklücke vorbeifährt, einem Rückwärtsfahrzug, der mit einer Kurvenfahrt mit Teil- oder Vollausschlag der lenkbaren Räder endet, um das Fahrzeug in eine Position zu bringen, die ein Vorwärtseinparken in die Querparklücke in einem Zug erlaubt und einem abschließenden Vorwärtsfahrzug zum Einparken des Kraftfahrzeugs in die Querparklücke; oder
(c) wenn das Kraftfahrzeug zumindest teilweise an der Querparklücke vorbeigefahren ist, Durchführung eines Rückwärtsfahrzuges, der mit einer Kurvenfahrt mit Vollausschlag der lenkbaren Räder endet, um das Fahrzeug in eine Position zu bringen, die ein Vorwärtseinparken in die Querparklücke in einem Zug erlaubt gefolgt von einem abschließenden Vorwärtsfahrzug zum Einparken des Kraftfahrzeugs in die Querparklücke.

Durch das erfindungsgemäße Verfahren wird der Fahrer eines Kraftfahrzeugs beim Vorwärtseinparken unterstützt, wobei maximal vier Fahrzüge erforderlich sind, um das Fahrzeug in eine vorgesehene Endposition in der Querparklücke zu bringen. Da das Verfahren insbesondere auch dann durchgeführt werden kann, wenn das Kraftfahrzeug bereits zum Teil in eine Querparklücke eingetaucht ist, ist anders als bei aus dem Stand der Technik bekannten Verfahren eine Vorbeifahrt an der Parklücke zur Vermessung vor der Durchführung des Fahrmanövers nicht notwendig.

Um zu vermeiden, dass das Kraftfahrzeug bei einem Rückwärtsfahrzug mit einem Objekt kollidiert, das sich zum Beispiel auf einer der Querparklücke gegenüberligenden Seite einer Fahrbahn befindet, werden in einer bevorzugten Ausführungsform Rückwärtsfahrzüge jeweils beendet, wenn ein vorgegebener Mindestabstand zu einem Objekt erreicht wird. Der Mindestabstand kann dabei zum Beispiel individuell eingestellt werden oder er wird vom Fahrassistenzsystem vorgegeben. Der Mindestabstand lässt sich dann zum Beispiel auf einem geeigneten Speichermedium, auf das ein Fahrassistenzsystem, mit dem das Verfahren durchgeführt wird, zurückgreifen kann, speichern.

Der Vorwärtsfahrzug in Schritt (b), der ein Kreisbogensegment mit Vollausschlag der lenkbaren Räder in einer ersten Richtung und ein Kreisbogensegment mit einem Ausschlag der lenkbaren Räder in einer zweiten, der ersten entgegengerichteten Richtung sowie eine Ausrichtungsgerade umfasst, wird durchgeführt, wenn mit diesem Zug ein direktes Einparken in die Parklücke möglich ist. Auf diese Weise lässt sich ein Einparken mit zwei Zügen realisieren. Wenn ein Einparken in zwei Zügen nicht möglich ist, wird anschließend an den Rückwärtsfahrzug in Schritt (b) zunächst ein Vorwärtsfahrzug, mit dem das Kraftfahrzeug zumindest teilweise an der Querparklücke vorbeifährt, durchgeführt, gefolgt von einem Rückwärtsfahrzug, der mit einer Kurvenfahrt mit Teil- oder Vollausschlag der lenkbaren Räder endet, um das Fahrzeug in eine Position zu bringen, die ein Vorwärtseinparken in die Querparklücke in einem Zug erlaubt und einem abschließenden Vorwärtsfahrzug zum Einparken des Kraftfahrzeugs in die Querparklücke. Hierdurch kann in allen üblichen Parksituationen ein Einparken in die Parklücke mit vier Zügen realisiert werden. Zudem ist es nicht notwendig, schnell hintereinander viele Lenkbewegungen durchzuführen, die vom Fahrer des Kraftfahrzeugs als unangenehm empfunden werden können.

Der Vorwärtsfahrzug bei einem vierzügigen Verfahren, mit dem das Kraftfahrzeug in die Querparklücke eingeparkt wird, wird vorzugsweise entsprechend dem Vorwärtsfahrzug des zweizügigen Verfahrens durchgeführt.

Sofern das Kraftfahrzeug nicht teilweise in die Querparklücke eingetaucht ist sondern bereits zumindest teilweise an der Querparklücke vorbeigefahren ist, so dass die Position des Kraftfahrzeugs im Wesentlichen der Position entspricht, die in Schritt (b) nach dem ersten Vorwärtsfahrzug bei einem vierzügigen Verfahren erreicht wird, werden zum Einparken der in Schritt (c) beschriebene Rückwärts- und Vorwärtsfahrzug durchgeführt. Das Kraftfahrzeug ist dabei im Allgemeinen vor Durchführung des Rückwärtszuges in einem Winkel von mehr als 0° zur Fahrtrichtung auf der die Querparklücke begrenzenden Fahrbahn ausgerichtet. Besonders bevorzugt für das erfindungsgemäße Verfahren ist es, wenn der Winkel, in dem das Kraftfahrzeug nach Vorbeifahrt an der Parklücke ausgerichtet ist, größer ist als 5°, weiter bevorzugt größer als 10°.

Damit der Fahrer des Kraftfahrzeugs die beim Einparkmanöver durchgeführten Fahrzüge angenehm empfindet, geht das erste Kreisbogensegment über ein Übergangssegment in das zweite Kreisbogensegment über und das zweite Kreisbogensegment über ein zweites Übergangssegment in die Ausrichtungsgerade. Die Übergangssegmente erlauben eine gleichmäßige Weiterfahrt zwischen den einzelnen Kreisbogensegmente beziehungsweise zwischen Kreisbogensegment und Ausrichtungsgerade. Es ist nicht notwendig, die Geschwindigkeit des Kraftfahrzeugs zu ändern oder das Kraftfahrzeug sogar anzuhalten, wenn ein Richtungswechsel erfolgt.

Die Ausrichtungsgerade kann gemäß parametrierbarer Regeln zur Ausrichtung des Fahrzeugs innerhalb der Parklücke sowie anhand der Vorbeifahrrichtung, der Ausrichtung der die Parklücke begrenzenden Objekte und auch anhand von Bodenmarkierungen, sofern die Umfeldsensorik diese erfassen kann, bestimmt werden.

Um zu vermeiden, dass das Kraftfahrzeug bei der Durchführung des Einparkmanövers mit einem die Querparklücke begrenzenden Objekt kollidiert, beispielsweise mit einem in einer benachbarten Parklücke parkenden Fahrzeug, weist das zweite Kreisbogensegment in Schritt (b) eine Position und einen Radius auf, der so gewählt ist, dass das Kraftfahrzeug einen vorgegebenen Mindestabstand zu die Querparklücke begrenzenden Objekten einhält und dass die Ausrichtungsgerade eine Tangente des zweiten Kreisbogensegmentes bildet. Wenn die Ausrichtungsgerade eine Tangente des zweiten Kreisbogensegments bildet, wird zum einen ein ausreichend großer Abstand zu die Querparklücke begrenzenden Objekten eingehalten, zum anderen ist auf einfache Weise ein Übergang vom Kreisbogen zur Geraden möglich, so dass dieser Übergang vom Fahrer des Kraftfahrzeugs nicht als unangenehm empfunden wird.

In einer bevorzugten Ausführungsform endet der Vorwärtsfahrzug, mit dem das Kraftfahrzeug zumindest teilweise an der Querparklücke vorbeifährt, so, dass die Querparklücke für andere Fahrzeuge blockiert wird. Dies hat den Vorteil, dass während des Einparkmanövers kein anderes Fahrzeug in die Parklücke einfahren kann und dem Fahrer auf diese Weise die Parklücke streitig macht. Das Einparkmanöver kann in jedem Fall bis zum gewünschten Ziel, nämlich dem Einparken des Fahrzeugs in der Querparklücke, durchgeführt werden.

Wenn der für das Fahrmanöver zur Verfügung stehende Platz nicht ausreicht, um das geplante Fahrmanöver durchzuführen, wird bei Erreichen eines minimalen vorgegebenen Abstandes zu einem Objekt oder einer Ecke der Querparklücke ein Rangierzug durchgeführt. Die Durchführung des Rangierzuges erlaubt ein Einparken in die Querparklücke auch dann, wenn nur wenig Platz zur Durchführung der einzelnen Fahrzüge zur Verfügung steht. Bei Durchführung eines Rangierzuges ist es möglich, dass sich die Anzahl der Fahrzüge auch auf mehr als vier erhöht.

In einer bevorzugten Ausführungsform werden mit der Umfeldsensorik erfasste Objekte auf einer der Querparklücke gegenüberliegenden Seite bei der Berechnung der für das Einparkmanöver notwendigen Fahrzüge berücksichtigt, um den Parkvorgang möglichst mit maximal vier Zügen abzuschließen.

Um dem Fahrer während des Einparkmanövers ausreichend Unterstützung bieten zu können, ist es notwendig, während des gesamten Fahrmanövers die Umgebung des Kraftfahrzeugs zu erfassen. Die Erfassung der Umgebung erfolgt dabei mit üblichen Sensoren, die zur Umfelderfassung eingesetzt werden. Derartige Sensoren sind zum Beispiel Abstandssensoren wie Ultraschallsensoren, Infrarotsensoren, Radarsensoren oder Lidarsensoren. Alternativ können auch andere optische Sensoren, beispielsweise Kameras mit einer geeigneten Bildverarbeitung zur Erfassung der Umgebung eingesetzt werden.

Das Fahrmanöver kann entweder automatisch oder semi-automatisch durchgeführt werden. Bei einer automatischen Durchführung werden sowohl die Längsführung, das heißt Bremsen, Geschwindigkeit halten und Beschleunigen, als auch die Querführung, das heißt Lenkbewegungen, automatisch durchgeführt. Hierzu ist es zum Beispiel möglich, das ein Steuergerät eines Fahrassistenzsystems, das zur Durchführung des Verfahrens eingesetzt wird, in die Motorsteuerung eingreifen kann, um beispielsweise das Kraftfahrzeug zu beschleunigen. Weiterhin ist auch ein Eingriff in die Bremsanlage notwendig, um das Kraftfahrzeug abbremsen oder anhalten zu können. Zur Durchführung der Querführung können zum Beispiel Stellmotoren vorgesehen sein, mit denen die lenkbaren Räder des Kraftfahrzeugs gelenkt werden können. Bei einem automatischen System hat dann das Steuergerät des Fahrassistenzsystems auch Zugriff auf die Stellmotoren für die Lenkung.

Im Unterschied zu einem automatischen System wird bei einem semi-automatischen System nur die Längsführung oder nur die Querführung vom Fahrassistensystem durchgeführt. Im übrigen muss der Fahrer des Kraftfahrzeugs noch selber aktiv werden. In einer Ausführungsform wird sowohl die Längsführung als auch die Querführung vom Fahrer durchgeführt. In diesem Fall werden dem Fahrer Hinweise zu notwendigen Aktionen, beispielsweise zum Anhalten und Wechsel von Vorwärtsfahrt zu Rückwärtsfahrt und zu notwendigen Lenkbewegungen gegeben. Die Hinweise können zum Beispiel akustisch, beispielsweise durch eine Sprachausgabe, optisch, beispielsweise durch Anzeige geeigneter Symbole oder haptisch, bei Lenkbewegungen zum Beispiel durch Aufbringen eines Moments auf das Lenkrad, so dass ein Gefühl wie beim Fahren in einer Spurrille erzeugt wird, erfolgen.

Die Erfindung umfasst weiterhin auch eine Vorrichtung zur Durchführung des Verfahrens, umfassend eine Umfeldsensorik, Mittel zur Durchführung von für das Fahrmanöver erforderlichen Vorwärtsfahrzügen und Rückwärtsfahrzügen sowie Mittel zur Bestimmung der Bahnen, entlang denen die Vorwärtsfahrzüge und Rückwärtsfahrzüge geführt werden.

Mit der Umfeldsensorik wird die Umgebung des Kraftfahrzeugs vor und während des Fahrmanövers erfasst. Eine Erfassung vor Beginn des Fahrmanövers ist zum Beispiel notwendig, um zu prüfen, ob tatsächlich eine geeignete Querparklücke vorliegt. Zudem werden die Daten der Umgebung benötigt, damit die für das Fahrmanöver notwendigen Trajektorien berechnet werden können, entlang denen die Fahrzüge durchgeführt werden. Die Umfeldsensorik umfasst zum Beispiel Ultraschallsensoren, Infrarotsensoren, Radarsensoren, LIDAR-Sensoren oder andere optische Sensoren wie Kameras.

Die Mittel zur Durchführung von für das Fahrmanöver erforderlichen Vorwärtsfahrzügen und Rückwärtsfahrzügen und die Mittel zur Bestimmung der Bahnen, entlang denen die Vorwärtsfahrzüge und Rückwärtsfahrzüge geführt werden, umfassen üblicherweise ein Steuergerät eines Fahrassistenzsystems mit einem Prozessor und einem Speichermittel mit einem Quellcode zur Berechnung der Bahnen. Das Steuergerät kann dabei ein eigenständiges Steuergerät sein oder mehrere Funktionen in einem Gerät verknüpfen.

### Kurze Beschreibung der Zeichnungen

Ausführungsbeispiele der Erfindung sind in den Figuren dargestellt und werden in der nachfolgenden Beschreibung näher erläuter.

Es zeigen:
- Figuren 1.1 bis 1.3: Typische Positionen eines Kraftfahrzeugs zu Beginn des Verfahrens,
- Figur 2: ein erfindungsgemäßes Einparkmanöver in zwei Fahrzügen,
- Figur 3: ein erfindungsgemäßes Einparkmanöver in drei Fahrzügen.

### Ausführungsformen der Erfindung

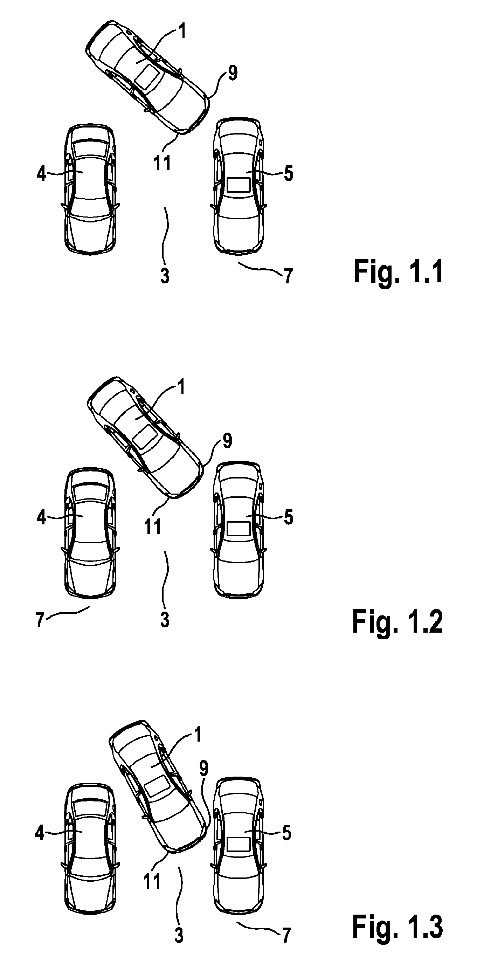

In den Figuren 1.1 bis 1.3 sind typische Positionen dargestellt, in denen sich ein Kraftfahrzeug zu Beginn des erfindungsgemäßen Verfahrens zur Unterstützung eines Fahrers eines Kraftfahrzeugs bei einem Einparkmanöver befinden kann.

Im Allgemeinen wird der Fahrer eines Kraftfahrzeugs 1 bereits beim Anfahren einer Querparklücke 3 versuchen, vorwärts in die Querparklücke 3, die in der hier dargestellten Situation auf der linken Seite von einem ersten Fahrzeug 4 und auf der rechten Seite von einem Fahrzeug 5 begrenzt ist, einzuparken. In vielen Fällen erlaubt es die Situation nicht, mit nur einem Vorwärtszug in die Querparklücke 3 einzuparken. In diesen Fällen endet der Vorwärtsfahrzug in der Regel mit einem teilweise in die Querparklücke 3 eingetauchten Kraftfahrzeug 1, wobei das Kraftfahrzeug 1 eine Position schräg zur Achse der Querparklücke 3 einnimmt. Eine Fortführung des Vorwärtsfahrzuges ist im Allgemeinen nicht möglich, da sonst eine Kollision mit einem Fahrzeug 5 erfolgt, das auf einem der Querparklücke 3 benachbarten Parkplatz 7 parkt.

Je nach Ausgangssituation kann das Kraftfahrzeug 1 wie in Figur 1.1 dargestellt nur mit seiner rechten vorderen Ecke 9 in die Querparklücke 3 eintauchen. Die linke vordere Ecke 11 befindet sich noch außerhalb der Querparklücke 3. Selbst bei Vollausschlag der lenkbaren Räder würde eine Fortführung des Vorwärtsfahrzuges zu einer Kollision mit dem die Querparklücke begrenzenden Fahrzeug 5 führen. Wenn etwas mehr Platz für den Vorwärtsfahrzug zur Verfügung steht, kann der erste Fahrzug auch so wie in Figur 1.2 dargestellt enden. In diesem Fall taucht das Kraftfahrzeug 1 zwar bereits mit beiden vorderen Ecken 9, 11 in die Querparklücke 3 ein, aber eine Fortführung des Vorwärtsfahrzuges würde auch in diesem Fall zu einer Kollision mit dem benachbarten Fahrzeug 5 führen, so dass der Vorwärtsfahrzug beendet werden muss.

Bei der in Figur 1.3 dargestellten Situation ist das Kraftfahrzeug 1 bereits bis zur Hälfte in die Querparklücke 3 eingetaucht. Je nach Abstand zum benachbarten Fahrzeug 5 besteht in diesem Fall die Möglichkeit, dass der Fahrzug ohne Kollision fortgesetzt werden kann oder aber wie in den in den Figuren 1.1 und 1.2 dargestellten Situationen eine Kollision mit dem benachbarten Fahrzeug 5 droht. Selbst wenn eine Fortsetzung möglich wäre, führt dies bei der in Figur 1.3 dargestellten Situation jedoch dazu, dass das Kraftfahrzeug 1 zu nah am benachbarten Fahrzeug 5 steht, so dass zum Beispiel ein Aussteigen nicht mehr möglich ist.

In allen in den Figuren 1.1 bis 1.3 gezeigten Situationen ist eine Korrektur erforderlich, um das Fahrzeug in eine Zielposition 13, die hier als gestrichelte Linie dargestellt ist, entlang der die Fahrzeugachse ausgerichtet wird, in die Querparklücke 3 einzuparken.

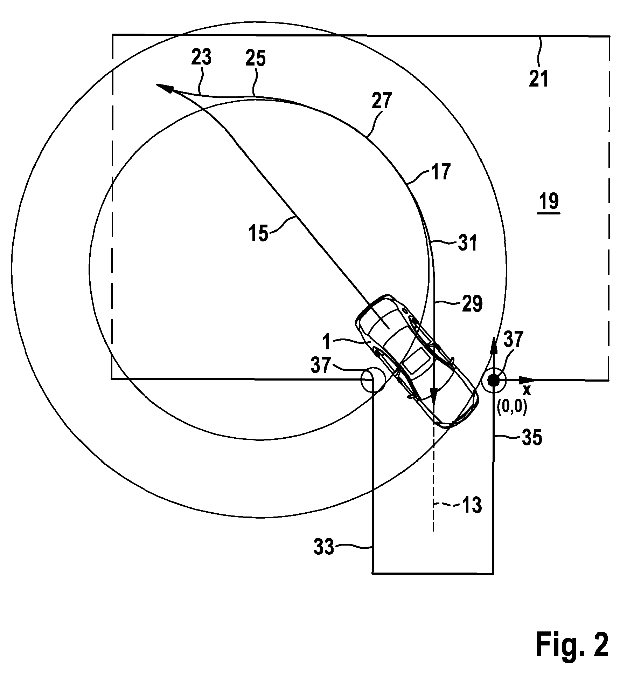

In Figur 2 ist ein erfindungsgemäßes Einparkmanöver aus einer der in den Figuren 1.1 bis 1.3 dargestellten Situationen in zwei Zügen gezeigt.

Erfindungsgemäß wird das Einparkmanöver automatisch oder semi-automatisch durchgeführt. Hierzu wird in einem ersten Schritt ein Rückwärtsfahrzug 15 durchgeführt, mit dem das Kraftfahrzeug 1 geradeaus rückwärts aus der Querparklücke 3 bewegt wird. Der Rückwärtsfahrzug 15 kann wie in Figur 2 dargestellt mit einer Kurvenfahrt enden. Hierdurch wird das Kraftfahrzeug 1 bereits beim Rückwärtsfahrzug in eine für einen nachfolgenden Vorwärtsfahrzug 17 günstigere Position gebracht. Die Beendigung des Rückwärtsfahrzuges mit einer leichten Kurve ist insbesondere dann vorteilhaft, wenn die Breite einer Fahrbahn 19, auf der das Fahrmanöver durchgeführt wird, auf der der Querparklücke 3 gegenüberliegenden Seite begrenzt ist. Eine solche Begrenzung 21 kann zum Beispiel durch gegenüberliegende Parklücken, eine Wand oder Mauer, eine Hecke oder geparkte Fahrzeuge gegeben sein. Wenn ausreichend Platz zur Verfügung steht und die Fahrbahn 19 nicht durch eine Begrenzung begrenzt ist, kann der erste Rückwärtsfahrzug auch nur geradeaus durchgeführt werden.

An den Rückwärtsfahrzug 15 schließt sich der Vorwärtsfahrzug 17 an. Dieser beginnt mit einem Kreisbogensegment 23, bei dem die lenkbaren Räder des Kraftfahrzeugs 1 in einer ersten Richtung, die von der Querparklücke 3 wegführt, voll eingeschlagen sind. An das erste Kreisbogensegment 23 schließt sich ein Übergangssegment 25 an, bei dem die lenkbaren Räder vom Einschlag des ersten Kreisbogensegments 23 in die entgegengesetzte Richtung eingeschlagen werden, um ein zweites Kreisbogensegment 27 zu durchfahren. Das zweite Kreisbogensegment 27 weist dabei einen Radius auf, der so gewählt ist, dass das Kraftfahrzeug 1 entlang des zweiten Kreisbogensegments 27 in eine Position gegebracht wird, dass das Einparken in die Querparklücke 3 entlang einer abschließenden Ausrichtungsgeraden 29 abgeschlossen werden kann. Die Ausrichtungsgerade 29 bildet dabei eine Tangente an den Kreisbogen des zweiten Kreisbogensegments 27. Um eine kontinuierliche Einfahrt in die Querparklücke 3 zu ermöglichen, befindet sich zwischen dem zweiten Kreisbogensegment 27 und der Ausgleichsgeraden 29 ein zweites Übergangssegment 31. Entlang dem zweiten Übergangssegment 31 werden die lenkbaren Räder vom Einschlag für das zweite Kreisbogensegment 27 in eine geradeaus gerichtete Position für die Ausrichtungsgerade 29 gebracht.

Damit das Einparkmanöver automatisch oder semiautomatisch durchgeführt werden kann, wobei ein geeignetes Fahrassistenzsystem die notwendigen Fahrzüge berechnet und anschließend durchführt, ist es notwendig, vor Beginn der Durchführung des Einparkmanövers die Umgebung zu erfassen und die Querparklücke 3, in die eingeparkt werden soll, zu identifizieren. Hierzu wird mit einem geeigneten Umfelderfassungssystem, das beispielsweise geeignete Abstandssensoren umfasst, die Umgebung des Kraftfahrzeugs 1 erfasst. Aus den erfassten Umgebungsdaten lässt sich eine linke Begrenzung 33 und eine rechte Begrenzung 35 der Querparklücke bestimmen. Gleichzeitig kann auch mindestens eine die Querparklücke an ihrer der Fahrbahn 19 zugewandten Seite begrenzende Ecke 37 erfasst werden.

In einer Ausführungsform der Erfindung lässt sich das automatische Einparkmanöver erst dann starten, wenn eine Querparklücke sicher erfasst wird. Dies ist zum Beispiel dann der Fall, wenn mindestens eine die Querparklücke begrenzende Ecke 37 erkannt wird. Wenn das Kraftfahrzeug 1 nicht an der Querparklücke vorbeifährt, ist dies in einer der in den Figuren 1.1 bis 1.3 gezeigten Positionen möglich. Das Einparkmanöver lässt sich somit jeweils erst dann starten, wenn eine entsprechende Position angefahren worden ist. Nach dem Start des Einparkmanövers wird zunächst der Rückwärtsfahrzug durchgeführt. Hierbei ist es möglich, dass das Einparkmanöver vollautomatisch vom Fahrassistenzsystem durchgeführt wird. In diesem Fall obliegt dem Fahrer lediglich eine überwachende Aufgabe. Alternativ ist es auch möglich, dass der Fahrer die Längsführung übernimmt und die Querführung automatisch durchgeführt wird. Weiterhin kann der Fahrer auch Längsführung und Querführung übernehmen und erhält hierzu jeweils entsprechende Hinweise vom Fahrassistenzsystem, um das Fahrzeug entlang der berechneten Bahnen in die Querparklücke 3 einzuparken.

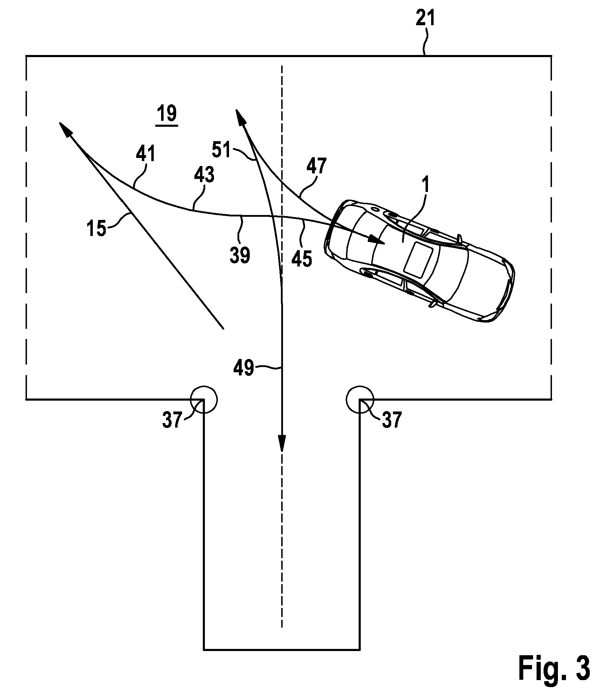

Wenn ein Einparken in zwei Zügen, wie in Figur 2 dargestellt, nicht möglich ist, kann auch ein Einparken in vier Zügen durchgeführt werden. Dies ist beispielhaft in Figur 3 dargestellt.

Wie in der in Figur 2 dargestellten Ausführungsform wird auch bei einem Einparkmanöver in vier Zügen als erstes ein Rückwärtsfahrzug 15 durchgeführt, bei dem das Kraftfahrzeug 1 geradeaus rückwärts bewegt wird. Wenn eine Begrenzung 21 den Weg begrenzt, der bei dem Rückwärtsfahrzug zurückgelegt werden kann, wird das Kraftfahrzeug 1 bis auf einen vorgegebenen Abstand zu der Begrenzung 21 bewegt. Der Abstand ist dabei zum Beispiel in einem Speicher des Fahrassistenzsystems, mit dem das Fahrmanöver durchgeführt wird, hinterlegt. Der Abstand kann dabei einen festen Wert einnehmen oder einen von der Geschwindigkeit des Kraftfahrzeugs 1 abhängigen. So ist es zum Beispiel möglich, bei einer höheren Geschwindigkeit einen größeren Abstand zu wählen als bei einer kleineren Geschwindigkeit. Der Rückwärtszug kann auch in seiner Länge begrenzt werden, um das Fahrzeug, insbesondere bei ungünstigen Startpositionen für ein zweizügiges Einparken, nicht zu weit von der Parklücke wegzubewegen.

An die Rückwärtsfahrzug 15 schließt sich ein erster Vorwärtsfahrzug 39 an. Mit dem Vorwärtsfahrzug wird das Kraftfahrzeug 1 an der Querparklücke 3 zumindest teilweise vorbeigeführt. Hierzu wird der Vorwärtsfahrzug 39 in ein erstes Kreisbogensegment 41, das einen Radius aufweist, der derart gerichtet ist, dass das Kraftfahrzeug 1 einen Bogen weg von der Querparklücke fährt. An das erste Kreisbogensegment 41 schließt sich ein Übergangssegment 43 an, entlang dem die lenkbaren Räder des Kraftfahrzeugs in die entgegengesetze Richtung gelenkt werden, um ein zweites Kreisbogensegment 45 in der entgegengesetzten Richtung anzuschließen. Mit dem zweiten Kreisbogensegment 45 wird der Vorwärtsfahrzug 39 beendet. Der Vorwärtszug 39 kann alternativ auch als einfacher Kreisbogen oder als Kombination aus Kreisbogen- und Geradensegment durchgeführt werden, wenn dadurch eine gleichwertige oder bessere Startposition für den Folgezug erreicht werden kann.

Nach dem ersten Vorwärtsfahrzug 39 folgt ein zweiter Rückwärtsfahrzug 47. Beim Rückwärtsfahrzug 47 fährt das Kraftfahrzeug 1 mit Teil- oder Vollausschlag der lenkbaren Räder einen Kreisbogen bis eine Ausgangsposition für einen abschließenden zweiten Vorwärtsfahrzug 49 erreicht ist. Zur Reduzierung des Platzbedarfs, insbesondere wenn der Platz zur gegenüberliegenden Seite begrenzt ist oder wenn bei Rückwärtsfahrt mit Vollausschlag der lenkbaren Räder die Möglichkeit einer Kollision mit einem Objekt auf der Parklückenseite bestünde, kann der Rückwärtszug 47 auch ein initiales Segment mit stetig wachsender Krümmung enthalten. Der zweite Vorwärtsfahrzug 49, der sich an an den zweiten Rückwärtsfahrzug 47 anschließt, umfasst gegebenenfalls einen Kreisbogen mit einem Ausschlag der lenkbaren Räder in der entgegengesetzten Richtung zum Kreisbogensegment des zweiten Rückwärtsfahrzuge 47, ein Übergangssegment 51, um die Räder in Richtung der Ausrichtungsgerade 29 auszurichten und die Ausrichtungsgerade 29. Entlang der Ausrichtungsgerade 29 wird das Kraftfahrzeug 1 in seine Endposition in der Querparklücke 3 geparkt.

Wenn das Kraftfahrzeug 1 zu Beginn des Einparkmanövers nicht wie in einer der Figuren 1.1 bis 1.3 ausgerichtet ist, sondern zumindest teilweise an der Querparklücke 3 vorbeigefahren ist, kann ein Einparkmanöver durchgeführt werden, das lediglich den zweiten Rückwärtsfahrzug 47 und den zweiten Vorwärtsfahrzug 49 des in Figur 3 dargestellten Einparkmanövers umfasst.

Um zu vermeiden, dass ein weiteres Kraftfahrzeug die Querparklücke 3 belegt, während das Einparkmanöver durchgeführt wird, ist es sowohl bei dem in Figur 2 dargestellten Einparkmanöver als auch bei dem in Figur 3 dargestellten Einparkmanöver bevorzugt, wenn die einzelnen Vorwärtsfahrzüge 17, 39, 49 und Rückwärtsfahrzüge 15, 47 jeweils so enden, dass die Querparklücke 3 zumindest teilweise blockiert wird. Hierzu kann das Kraftfahrzeug 1 entweder teilweise in die Querparklücke 3 eintauchen oder das Kraftfahrzeug 1 wird so bewegt, dass ein Teil des Kraftfahrzeugs 1 noch vor der Querparklücke 3 steht.

Um die gewünschte Endposition in der Querparklücke 3 zu erreichen, wird während des gesamten Einparkmanövers die Umgebung des Kraftfahrzeugs weiter erfasst und geprüft, ob die zuvor erfassten Daten noch mit den aktuell erfassten übereinstimmen. Bei einer Abweichung besteht die Möglichkeit einer Nachkorrektur. Bei der Nachkorrektur wird die Ausrichtungsgerade 29 neu berechnet und das Kraftfahrzeug 1 so gesteuert, dass es entlang der korrigierten Ausrichtungsgerade 29 bewegt wird.

Wenn während des Parkvorgangs ersichtlich wird, dass die parametrierten seitlichen Sicherheitsabstände bei Weiterfahrt in einer sich verjüngenden Parklücke nicht mehr eingehalten würden, oder ein Objekt in der Parklücke die Weiterfahrt blockiert, wird der Parkvorgang beendet.

## Patentansprüche

1. Verfahren zur Unterstützung eines Fahrers eines Kraftfahrzeugs (1) bei einem Einparkmanöver in eine Querparklücke (3), bei dem das Kraftfahrzeug (1) vorwärts in die Querparklücke (3) eingeparkt wird, folgende Schritte umfassend:
(a) Erfassen der Umgebung des Kraftfahrzeugs (1) mit einer Umfeldsensorik und Auswerten von mit der Umfeldsensorik erfassten Daten zur Erfassung einer Querparklücke (3) und
(b) wenn das Kraftfahrzeug (1) zumindest teilweise in eine Querparklücke (3) eintaucht, Durchführung eines geradeaus gerichteten Rückwärtsfahrzuges (15),
• gefolgt von einem Vorwärtsfahrzug (17), der ein Kreisbogensegment (23) mit Vollausschlag der lenkbaren Räder in einer ersten Richtung und ein Kreisbogensegment (27) mit einem Ausschlag der lenkbaren Räder in einer zweiten, der ersten entgegengerichteten Richtung sowie eine Ausrichtungsgerade (29) umfasst, wenn mit diesem Vorwärtszug (17) ein direktes Einparken in die Parklücke möglich ist;
• oder wenn ein Einparken in insgesamt zwei Zügen nicht möglich ist, gefolgt von einem Vorwärtsfahrzug (39), mit dem das Kraftfahrzeug zumindest teilweise an der Querparklücke (3) vorbeifährt, einem Rückwärtsfahrzug (47), der mit einer Kurvenfahrt mit Vollausschlag der lenkbaren Räder endet,
um das Kraftfahrzeug (1) in eine Position zu bringen, die ein Vorwärtseinparken in die Querparklücke (3) in einem Zug erlaubt und einem abschließenden Vorwärtsfahrzug (49) zum Einparken des Kraftfahrzeugs (1) in die Querparklücke (3); oder
(c) wenn das Kraftfahrzeug (1) zumindest teilweise an der Querparklücke (3) vorbeigefahren ist, Durchführung eines Rückwärtsfahrzuges (47), der mit einer Kurvenfahrt mit Teil- oder Vollausschlag der lenkbaren Räder endet, um das Kraftfahrzeug (1) in eine Position zu bringen, die ein Vorwärtseinparken in die Querparklücke (3) in einem Zug erlaubt, gefolgt von einem abschließenden Vorwärtsfahrzug (49) zum Einparken des Kraftfahrzeugs (1) in die Querparklücke (3).

2. Verfahren gemäß Anspruch 1, **dadurch gekennzeichnet, dass** die Rückwärtsfahrzüge (15; 47) jeweils beendet werden, wenn ein vorgegebener Mindestabstand zu einem Objekt erreicht wird.

3. Verfahren gemäß Anspruch 1 oder 2, **dadurch gekennzeichnet, dass** das erste Kreisbogensegment (23) über ein Übergangssegment (25) in das zweite Kreisbogensegment (27) übergeht und das zweite Kreisbogensegment (27) über ein zweites Übergangssegment (31) in die Ausrichtungsgerade (29).

4. Verfahren gemäß einem der Ansprüche 1 bis 3, **dadurch gekennzeichnet, dass** in Schritt (b) das zweite Kreisbogensegment (27) eine Position und einen Radius aufweist, der so gewählt ist, dass das Kraftfahrzeug (1) einen vorgegebenen Mindestabstand zu die Querparklücke (3) begrenzenden Objekten einhält und dass die Ausrichtungsgerade (29) eine Tangente des zweiten Kreisbogensegmentes (27) bildet.

5. Verfahren gemäß einem der Ansprüche 1 bis 4, **dadurch gekennzeichnet, dass** der Vorwärtsfahrzug (39), mit dem das Kraftfahrzeug (1) zumindest teilweise an der Querparklücke (3) vorbeifährt, so endet, dass die Querparklücke (3) für andere Fahrzeuge blockiert wird.

6. Verfahren gemäß einem der Ansprüche 1 bis 5, **dadurch gekennzeichnet, dass** mit der Umfeldsensorik erfasste Objekte auf einer der Querparklücke gegenüberliegenden Seite bei der Berechnung der für das Einparkmanöver notwendigen Fahrzüge berücksichtigt werden, um den Parkvorgang möglichst mit maximal vier Zügen abzuschließen.

7. Verfahren gemäß einem der Ansprüche 1 bis 6, **dadurch gekennzeichnet, dass** bei Erreichen eines minimalen vorgegebenen Abstandes zu einem Objekt oder einer Ecke (37) der Querparklücke (3) ein Rangierzug durchgeführt wird, wenn der für das Fahrmanöver zur Verfügung stehende Platz nicht ausreicht, um das geplante Fahrmanöver durchzuführen.

8. Vorrichtung zur Durchführung des Verfahrens gemäß einem der Ansprüche 1 bis 7, umfassend eine Umfeldsensorik, Mittel zur Durchführung von für das Fahrmanöver erforderlichen Vorwärtsfahrzügen (17; 39, 49) und Rückwärtsfahrzügen (15; 47) sowie Mittel zur Bestimmung der Bahnen, entlang denen die Vorwärtsfahrzüge (17; 39, 49) und Rückwärtsfahrzüge (15; 47) geführt werden.

9. Vorrichtung gemäß Anspruch 8, **dadurch gekennzeichnet, dass** die Umfeldsensorik Ultraschallsensoren, Infrarotsensoren, Radarsensoren, LIDAR-Sensoren oder andere optische Sensoren umfasst.

10. Vorrichtung gemäß Anspruch 8 oder 9, **dadurch gekennzeichnet, dass** die Mittel zur Durchführung von für das Fahrmanöver erforderlichen Vorwärtsfahrzügen (17; 39, 49) und Rückwärtsfahrzügen (15; 47) und die Mittel zur Bestimmung der Bahnen, entlang denen die Vorwärtsfahrzüge (17; 39, 49) und Rückwärtsfahrzüge (15; 47) geführt werden, ein Steuergerät eines Fahrassistenzsystems mit einem Prozessor und einem Speichermittel mit einem Quellcode zur Berechnung der Bahnen umfassen.

## Claims

1. Method for assisting a driver of a motor vehicle (1) during a parking manoeuvre into a lateral parking space (3), in which method the motor vehicle (1) is parked forwards into the lateral parking space (3), comprising the following steps:
(a) detecting the surroundings of the motor vehicle (1) with a surroundings sensor system, and evaluating data, detected by the surroundings sensor system, in order to detect a lateral parking space (3), and
(b) if the motor vehicle (1) dips at least partially into a lateral parking space (3), carrying out a reversing movement (15) which is directed straight ahead,
• followed by a forward movement (17) which comprises a circular arc segment (23) with full lock of the steerable wheels in a first direction, and a circular arc segment (27) with a lock of the steerable wheels in a second direction which is opposed to the first, and an orientation straight line (29) if direct parking into the parking space is possible with this forward movement (17);
• or if parking in a total of two movements is not possible, followed by a forward movement (39) with which the motor vehicle drives at least partially past the lateral parking space (3), a reversing movement (47) which ends with cornering with full lock of the steerable wheels,
in order to move the motor vehicle (1) into a position which permits forward parking into the lateral parking space (3) in one movement and a final forward movement (49) for parking the motor vehicle (1) in the lateral parking space (3); or
(c) if the motor vehicle (1) has driven at least partially past the lateral parking space (3), carrying out a reversing movement (47) which ends with cornering with partial lock or full lock of the steerable wheels, in order to move the motor vehicle (1) into a position which permits forward parking into the lateral parking space (3) in one movement, followed by a final forward movement (49) for parking the motor vehicle (1) in the lateral parking space (3).

2. Method according to Claim 1, **characterized in that** the reversing movements (15; 47) are each ended when a predefined minimum distance from an object is reached.

3. Method according to Claim 1 or 2, **characterized in that** the first circular arc segment (23) merges, via a transitional segment (25), with the second circular arc segment (27), and the second circular arc segment (27) merges with the orientation straight line (29) via a second transitional segment (31).

4. Method according to one of Claims 1 to 3, **characterized in that** in step (b) the second circular arc segment (27) has a position and a radius, which radius is selected such that the motor vehicle (1) maintains a predefined minimum distance from objects bounding the lateral parking space (3), and **in that** the orientation straight line (29) forms a tangent of the second circular arc segment (27).

5. Method according to one of Claims 1 to 4, **characterized in that** the forward movement (39) with which the motor vehicle (1) drives at least partially past the lateral parking space (3) ends in such a way that the lateral parking space (3) is blocked to other vehicles.

6. Method according to one of Claims 1 to 5, **characterized in that** objects which are detected with the surroundings sensor system on a side lying opposite the lateral parking space are taken into account during the calculation of the movements which are necessary for the parking manoeuvre, in order to terminate the parking process as far as possible with a maximum of four movements.

7. Method according to one of Claims 1 to 6, **characterized in that** when a minimum predefined distance from an object or a corner (37) of the lateral parking space (3) is reached, a manoeuvring movement is carried out if the space which is available for the driving manoeuvre is not sufficient to carry out the planned driving manoeuvre.

8. Device for carrying out the method according to one of Claims 1 to 7, comprising a surroundings sensor system, means for carrying out forward movements (17; 39, 49) and reversing movements (15; 47) which are necessary for the driving manoeuvre, as well as means for determining the paths along which the forward movements (17; 39, 49) and reversing movements (15; 47) are routed.

9. Device according to Claim 8, **characterized in that** the surroundings sensor system comprises ultrasonic sensors, infrared sensors, radar sensors, LIDAR sensors or other optical sensors.

10. Device according to Claim 8 or 9, **characterized in that** the means for carrying out forward movements (17; 39, 49) and reversing movements (15; 47) which are necessary for the driving manoeuvre and the means for determining the paths along which the forward movements (17; 39, 49) and reversing movements (15; 47) are routed comprise a control unit of a driving assistance system with a processor and a memory means having a source code for calculating the paths.

## Revendications

1. Procédé d'assistance d'un conducteur d'un véhicule automobile (1) lors d'une manoeuvre d'entrée en stationnement dans un créneau de stationnement transversal (3), lors de laquelle le véhicule automobile (1) est mis en stationnement en marche avant dans le créneau de stationnement transversal (3), comprenant les étapes suivantes :
(a) détection de l'environnement du véhicule automobile (1) avec un système de détection d'environnement et interprétation des données détectées avec le système de détection d'environnement en vue de détecter un créneau de stationnement transversal (3) et
(b) lorsque le véhicule automobile (1) pénètre au moins partiellement dans un créneau de stationnement transversal (3), exécution d'une course en marche arrière (15) dirigée en ligne droite,
* suivi par une course en marche avant (17), laquelle comprend un segment en arc de cercle (23) avec braquage complet des roues orientables dans une première direction et un segment en arc de cercle (27) avec un braquage des roues orientables dans une deuxième direction opposée à la première, ainsi qu'une droite d'alignement (29) si une entrée en stationnement directe dans le créneau de stationnement est possible avec cette course en marche avant (17) ;
* ou, si une entrée en stationnement est impossible en un total de deux courses, suivi par une course en marche avant (39), avec laquelle le véhicule automobile (1) passe au moins partiellement devant le créneau de stationnement transversal (3), une course en marche arrière (47) qui se termine par un virage avec braquage complet des roues orientables,
afin d'amener le véhicule automobile (1) dans une position qui autorise une entrée en stationnement en marche avant dans le créneau de stationnement transversal (3) en une seule course, puis une course en marche avant finale (49) destinée à l'entrée en stationnement du véhicule automobile (1) dans le créneau de stationnement transversal (3) ; ou
(c) lorsque le véhicule automobile (1) est passé au moins partiellement devant le créneau de stationnement transversal (3), exécution d'une course en marche arrière (47) qui se termine par un virage avec braquage partiel ou complet des roues orientables afin d'amener le véhicule automobile (1) dans une position qui autorise une entrée en stationnement en marche avant dans le créneau de stationnement transversal (3) en une seule course, suivi d'une course en marche avant finale (49) destinée à l'entrée en stationnement du véhicule automobile (1) dans le créneau de stationnement transversal (3).

2. Procédé selon la revendication 1, **caractérisé en ce que** les courses en marche arrière (15 ; 47) prennent respectivement fin lorsqu'un écart minimal prédéfini par rapport à un objet est atteint.

3. Procédé selon la revendication 1 ou 2, **caractérisé en ce que** le premier segment en arc de cercle (23) se transforme en le deuxième segment en arc de cercle (27) par le biais d'un segment de transition (25) et le deuxième segment en arc de cercle (27) en la droite d'alignement (29) par le biais d'un deuxième segment de transition (31).

4. Procédé selon l'une des revendications 1 à 3, **caractérisé en ce qu'**à l'étape (b), le deuxième segment en arc de cercle (27) présente une position et un rayon qui sont choisis de telle sorte que le véhicule automobile (1) garde un écart minimal prédéfini par rapport aux objets qui délimitent le créneau de stationnement transversal (3) et **en ce que** la droite d'alignement (29) forme une tangente du deuxième segment en arc de cercle (27).

5. Procédé selon l'une des revendications 1 à 4, **caractérisé en ce que** la course en marche avant (39) avec laquelle le véhicule automobile (1) passe au moins partiellement devant le créneau de stationnement transversal (3) se termine de telle sorte que le créneau de stationnement transversal (3) est bloqué pour d'autres véhicules.

6. Procédé selon l'une des revendications 1 à 5, **caractérisé en ce que** les objets détectés avec le système de détection d'environnement sur un côté à l'opposé du créneau de stationnement transversal sont pris en compte lors du calcul des courses de conduite nécessaires pour la manoeuvre d'entrée en stationnement afin d'accomplir la manoeuvre de stationnement si possible avec un maximum de quatre courses.

7. Procédé selon l'une des revendications 1 à 6, **caractérisé en ce que** lorsqu'un écart prédéfini minimum par rapport à un objet ou un coin (37) du créneau de stationnement transversal (3) est atteint, une course de manoeuvre est exécutée si la place disponible pour la manoeuvre de conduite ne suffit pas pour exécuter la manoeuvre de conduite prévue.

8. Dispositif pour mettre en oeuvre le procédé selon l'une des revendications 1 à 7, comprenant un système de détection d'environnement, des moyens destinés à exécuter les courses en marche avant (17 ; 39, 49) et les courses en marche arrière (15 ; 47) nécessaires pour la manoeuvre de conduite, ainsi que des moyens destinés à déterminer les trajectoires le long desquelles sont guidées les courses en marche avant (17 ; 39, 49) et les courses en marche arrière (15 ; 47).

9. Dispositif selon la revendication 8, **caractérisé en ce que** le système de détection d'environnement comprend des capteurs à ultrasons, des capteurs à infrarouges, des capteurs radar, des capteurs LIDAR ou d'autres capteurs optiques.

10. Dispositif selon la revendication 8 ou 9, **caractérisé en ce que** les moyens destinés à exécuter les courses en marche avant (17 ; 39, 49) et les courses en marche arrière (15 ; 47) nécessaires pour la manoeuvre de conduite ainsi que les moyens destinés à déterminer les trajectoires le long desquelles sont guidées les courses en marche avant (17 ; 39, 49) et les courses en marche arrière (15 ; 47) comprennent un contrôleur d'un système d'assistance de conduite, doté d'un processeur et d'un moyen de mémoire avec un code source servant à calculer les trajectoires.
